(19)

Europäisches
Patentamt
European
Patent Office
Office européen
des brevets

(11) **EP 4 401 365 A1**

(12) **EUROPEAN PATENT APPLICATION**
published in accordance with Art. 153(4) EPC

(43) Date of publication:
**17.07.2024 Bulletin 2024/29**

(21) Application number: **21956823.5**

(22) Date of filing: **10.09.2021**

(51) International Patent Classification (IPC):
**H04L 27/26** (2006.01)

(52) Cooperative Patent Classification (CPC):
**H04L 27/26**

(86) International application number:
**PCT/JP2021/033425**

(87) International publication number:
**WO 2023/037526 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **MATSUMURA, Yuki**
**Tokyo 100-6150 (JP)**

• **NAGATA, Satoshi**
**Tokyo 100-6150 (JP)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to an aspect of the present disclosure includes a receiving section that receives a configuration of a sounding reference signal (SRS) resource set, and receives downlink control information including a plurality of indications of SRS resources in the SRS resource set, and a control section that applies the plurality of indications to a plurality of respective frequency parts used for a non-codebook transmission of a physical uplink shared channel. According to an aspect of the present disclosure, it is possible to adequately controlling a precoding even in a case that the precoding is selectively performed in a frequency direction.

FIG. 5

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, Rel-18 NR or later versions), precoding (frequency selective precoding) control for UL transmission in a frequency direction is under study. However, details of this operation have not been sufficiently studied. For example, what conditions/rules/parameters are used to control the precoding have not been sufficiently studied in a case of performing the frequency selective precoding. Unless the precoding is adequately applied, throughput reduction or communication quality degradation may occur.

In view of above, an object of the present disclosure is to provide a terminal, a radio communication method, and a base station capable of adequately controlling a precoding even in a case that the precoding is selectively performed in a frequency direction.

Solution to Problem

A terminal according to an aspect of the present disclosure includes a receiving section that receives a configuration of a sounding reference signal (SRS) resource set, and receives downlink control information including a plurality of indications of SRS resources in the SRS resource set, and a control section that applies the plurality of indications to a plurality of respective frequency parts used for a non-codebook transmission of a physical uplink shared channel.

Advantageous Effects of Invention

According to an aspect of the present disclosure, it is possible to adequately controlling a precoding even in a case that the precoding is selectively performed in a frequency direction.

Brief Description of Drawings

[FIG. 1] FIG. 1 is a diagram to illustrate an example of association between an SRI field index and one or more SRIs in a case of $L_{max} = 1$.
[FIG. 2] FIG. 2 is a diagram to illustrate an example of association between an SRI field index and one or more SRIs in a case of $L_{max} = 2$.

[FIG. 3] FIG. 3 is a diagram to illustrate an example of association between an SRI field index and one or more SRIs in a case of $L_{max} = 3$.

[FIG. 4] FIG. 4 is a diagram to illustrate an example of association between an SRI field index and one or more SRIs in a case of $L_{max} = 4$ .

[FIG. 5] FIG. 5 is a diagram to illustrate an example of Y fields according to a first embodiment.

[FIG. 6] FIGS. 6A and 6B are diagrams to illustrate example 1 of the first embodiment.

[FIG. 7] FIGS. 7A and 7B are diagrams to illustrate example 2 of the first embodiment.

[FIG. 8] FIG. 8 is a diagram to illustrate an example of mapping 1 according to the first embodiment.

[FIG. 9] FIGS. 9A and 9B are diagrams to illustrate examples of mapping 2 according to the first embodiment.

[FIG. 10] FIG. 10 is a diagram to illustrate an example according to a second embodiment.

[FIG. 11] FIGS. 11A to 11C are diagrams to illustrate examples of a procedure based on the first embodiment.

[FIG. 12] FIGS. 12A to 12D are diagrams to illustrate examples of aspect 3-1.

[FIG. 13] FIGS. 13A to 13C are diagrams to illustrate examples of aspect 3-2.

[FIG. 14] FIGS. 14A and 14B are diagrams to illustrate examples of a variation of a third embodiment.

[FIG. 15] FIG. 15 is a diagram to illustrate an example according to a fourth embodiment.

[FIG. 16] FIG. 16 is a diagram to illustrate an example of a schematic structure of a radio communication system according to one embodiment.

[FIG. 17] FIG. 17 is a diagram to illustrate an example of a structure of a base station according to one embodiment.

[FIG. 18] FIG. 18 is a diagram to illustrate an example of a structure of a user terminal according to one embodiment.

[FIG. 19] FIG. 19 is a diagram to illustrate an example of a hardware structure of the base station and the user terminal according to one embodiment.

[FIG. 20] FIG. 20 is a diagram to illustrate an example of a vehicle according to one embodiment.

Description of Embodiments

(PUSCH Precoder)

In NR, a user terminal (User Equipment (UE)) may support at least one of codebook (CB) based transmission and non-codebook (NCB) based transmission.

For example, the UE may use at least sounding reference signal (SRS) resource index (SRS resource index (SRI)) to determine a precoder (precoding matrix) for at least one of CB based and NCB based uplink shared channel (Physical Uplink Shared Channel (PUSCH)) transmissions.

The UE may receive information used to transmit a measurement reference signal (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be associated with the given number of SRS resources (may group the given number of SRS resources). Each SRS resource may be identified by an SRS resource indicator (SRI) or an SRS resource ID (identifier).

The SRS resource set information may include an SRS resource set ID (SRS-ResourceSetId), a list of SRS resource IDs used in the resource set (SRS-ResourceId), an SRS resource type, and information of usage of SRS.

The usage (an RRC parameter "usage", an L1 (Layer-1) parameter "SRS-SetUse") may be, for example, beam management(beamManagement), codebook (CB), noncodebook (NCB), antenna switching, or the like. An SRS for the codebook or non-codebook usage may be used to determine a precoder for a codebook-based or non-codebook-based uplink shared channel (Physical Uplink Shared Channel (PUSCH)) transmission base on the SRI.

In a case of the CB based transmission, the UE may determine the precoder for PUSCH transmission on the basis of an SRI, a transmitted rank indicator (TRI), a transmitted precoding matrix indicator (TPMI), or the like. In a case of the NCB based transmission, the UE may determine the precoder for PUSCH transmission on the basis of an SRI.

The SRI, the TRI, the TPMI, and the like may be notified to the UE by way of downlink control information (DCI). The SRI may be specified by an SRS Resource Indicator field (SRI field) of the DCI, or by a parameter "srs-ResourceIndicator" included in an RRC information element "ConfiguredGrantConfig" of a configured grant PUSCH.

The TRI and the TPMI may be specified by a precoding information and number of layers field ("Precoding information and number of layers" field) of the DCI. Note that in the following description, for simplicity, the "precoding information and number of layers field" is also referred to simply as the "precoding field".

Note that the maximum number of layers (maximum rank) for UL transmission may be configured by an RRC parameter "maxRank" for the UE.

The UE may report UE capability information for a precoder type and be configured with a precoder type based on the UE capability information through higher layer signaling from the base station. The UE capability information may be information of the precoder type that the UE uses in PUSCH transmission (which may be described as an RRC parameter "pusch-TransCoherence").

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine the precoder used for PUSCH transmission, based on information of a precoder type included in PUSCH configuration information notified through higher layer signaling (a "PUSCH-Config" information element in the RRC signaling) (which may be referred to as an RRC parameter "codebookSubset"). The UE may be configured with a subset of codebook specified by the TPMI by codebookSubset.

Note that the precoder type may be specified by any one of full coherent (fully coherent, coherent), partial coherent, and non coherent, or a combination of at least two thereof (for example, which may be represented by parameters such as "full and partial and non coherent (fullyAndPartialAndNonCoherent)", "partial and non coherent (partialAndNonCoherent)").

The full coherent may mean that all antenna ports used for transmission are synchronized (this may be expressed as being capable of being in phase or being the same in the applied precoder). The partial coherent may mean that some of the antenna ports used for transmission are synchronized with each other, but those ports are not synchronized with other ports. The non coherent may mean that the respective antenna ports used for transmission are not synchronized with each other.

Note that the UE supporting the precoder type of full coherent may be assumed to support the precoder types of partial coherent and non coherent. The UE supporting the precoder type of partial coherent may be assumed to support the precoder type of non coherent.

The precoder type may be interpreted as a coherency, a PUSCH transmission coherence, a coherent type, a coherence type, a codebook type, a codebook subset, a codebook subset type, or the like.

The UE may determine, from a plurality of precoders (which may be referred to as precoding matrix, codebook, or the like) for CB based transmission, a precoding matrix corresponding to a TPMI index obtained from the DCI scheduling UL transmission (for example, DCI format 0_1, the same is applied to the following description).

To be more specific, in Rel-15/16 NR, in a case of using non-codebook based transmission for PUSCH, the UE is configured with an SRS resource set having up to four SRS resources for the non-codebook usage by the RRC, and may be indicated with one or more of these up to four SRS resources by the DCI (2-bit SRI field).

The UE may determine the number of layers (transmission rank) for PUSCH based on the SRI field. For example, the UE may determine that the number of SRS resources specified by the SRI field is the same as the number of layers for PUSCH. The UE may compute a precoder for the SRS resource.

In a case that a CSI-RS associated with the SRS resource (or the SRS resource set to which the SRS resource belongs) (which may be referred to an associated CSI-RS) is configured by the higher layer, a transmission beam for PUSCH may be computed based on (measurement of) the configured associated CSI-RS. Not in the above case, the transmission beam for PUSCH may be specified by the SRI.

Note that the UE may be configured with whether to use codebook based PUSCH transmission or non-codebook based PUSCH transmission, by a higher layer parameter "txConfig" indicating a transmission scheme. That parameter may indicate a value of "codebook (codebook)" or "non-codebook (nonCodebook)".

In the present disclosure, the codebook based PUSCH (codebook based PUSCH transmission, codebook based transmission) may mean a PUSCH in a case that "codebook" as a transmission scheme is configured for the UE. In the present disclosure, the non-codebook based PUSCH (non-codebook based PUSCH transmission, non-codebook based transmission) may mean a PUSCH in a case that "non-codebook" as a transmission scheme is configured for the UE.

(SRI Field)

In the non-codebook based PUSCH transmission scheme in Rel. 15/16, one SRS resource set for non-codebook is configured with up to four 1-port SRS resources and associated with an NZP CSI-RS. The SRI field in the DCI implicitly indicates the rank and precoder for non-codebook.

In a case that a transmission configuration (txConfig) is NCB (PUSCH transmission is NCB based), a size of the SRI field in DCI format 0_1/0_2 is given by Expression 1 below. Here, Expression 2 included in Expression 1 expresses the number of combinations for selecting k items from $N_{SRS}$ items, and is also called a binomial coefficients.

In the present disclosure, Expression 2 may be expressed as $C(N_{SRS}, k)$. In the present disclosure, a ceiling function used in Expression 1 may be expressed as ceil(x).

[Math. 1]

$$\left\lceil \log_2 \left( \sum_{k=1}^{\min\{L_{\max}, N_{SRS}\}} \binom{N_{SRS}}{k} \right) \right\rceil \qquad \text{(Expression 1)}$$

$$\binom{N_{SRS}}{k} \qquad \text{(Expression 2)}$$

Here, $N_{SRS}$ is configured by a list of SRS resource sets (srs-ResourceSetToAddModList) and represents the number of SRS resources in the SRS resource set associated with the non-codebook usage. In a case that the UE supports an operation using a higher layer parameter maxMIMO-Layers indicating the maximum number of Multi Input Multi Output (MIMO) layers, and is configured with a higher layer parameter maxMIMO-Layers, $L_{max}$ is given by the parameter. In not the above case, $L_{max}$ is given by the maximum number of layers for PUSCH supported by the UE.

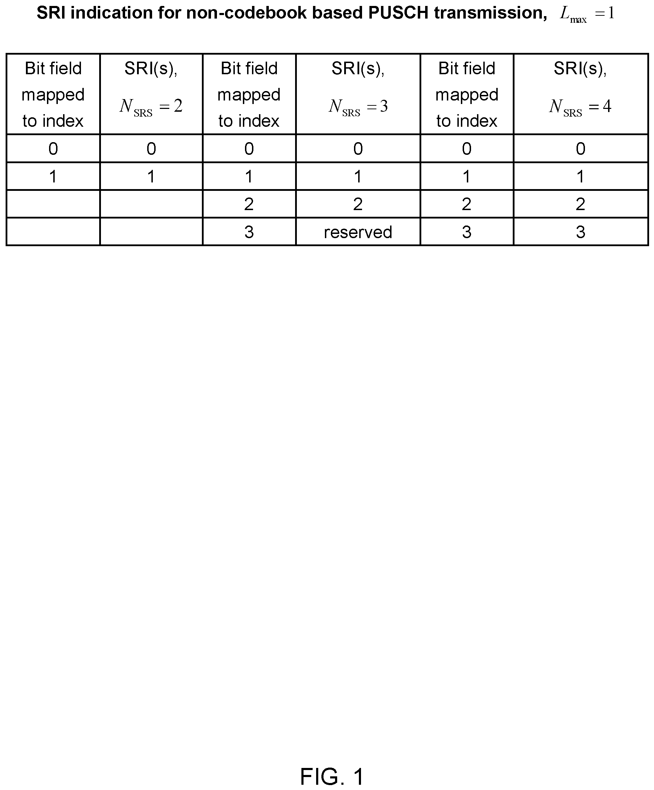

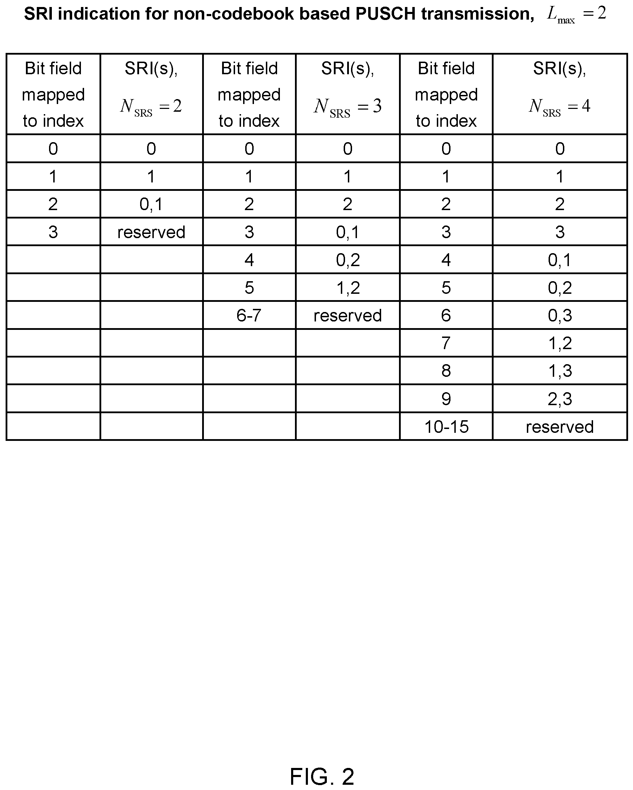

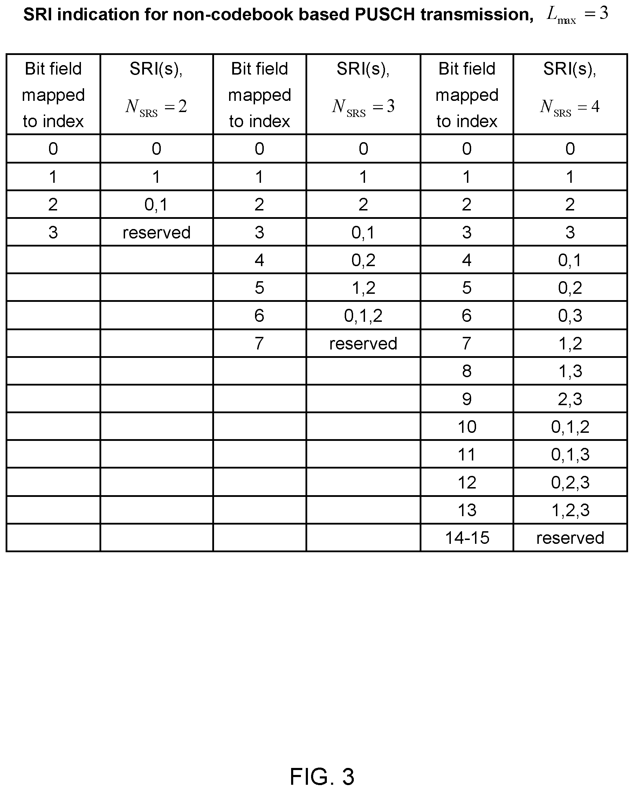

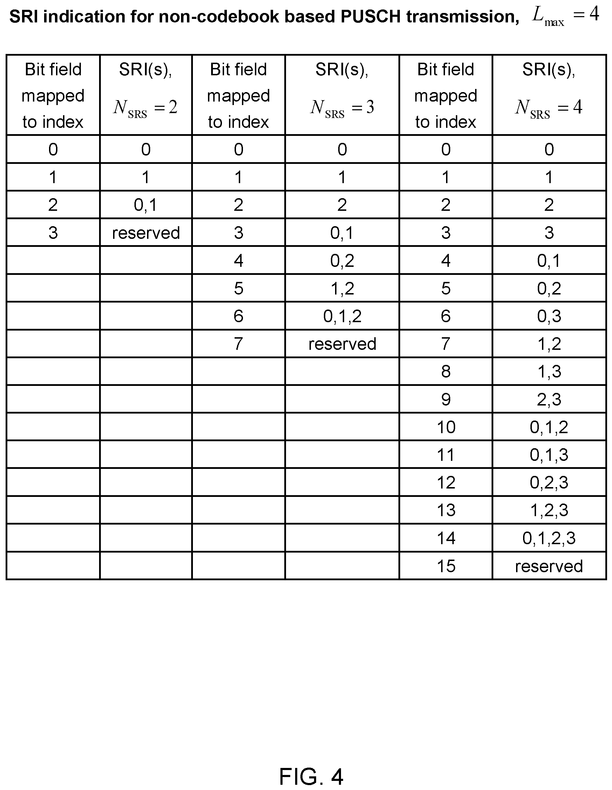

For NCB based PUSCH transmission, association between an index indicated by the SRI field (SRI field index/SRI index) and one or more SRIs (SRS resource IDs) complies with FIG. 1 (in a case of $L_{max}$ = 1)/FIG. 2 (in a case of $L_{max}$ = 2) /FIG. 3 (in a case of $L_{max}$ = 3)/FIG. 4 (in a case of $L_{max}$ = 4) .

(UL Subband Precoding)

In Rel-18 NR and later versions, in a case of performing UL transmission (for example, PUSCH transmission), it is assumed to support a UL subband precoding (or frequency selective precoding) applying a plurality of precodings in the frequency domain. The frequency selective precoding may be interpreted as subband precoding, separate precoding, frequency group precoding, or frequency direction precoding.

In other words, the precoding application is assumed to be controlled based on a given frequency unit. The frequency domain may be interpreted as a frequency direction. The frequency unit may be interpreted as a frequency resource unit, a subband unit, a frequency part unit, or a bandwidth unit.

(Analysis)

Regarding UL MIMO TPMI enhancement for CB based PUSCH using the frequency selective precoding, discussions 1 to 3 below are under study.

[Discussion 1]

A frequency selective precoding granularity and Y frequency parts for UL PUSCH are defined/configured. For example, the frequency selective precoding is a precoding for every precoding resource block group (X subcarriers/resource block (RB)/physical resource block (PRB)/resource block group (RBG)/subband/physical resource block group (PRG)) .

[Discussion 2]

The UL frequency selective precoding for PUSCH is enabled/disabled by the RRC IE/MAC CE/DCI.

[Discussion 3]

(Y - 1) new fields for indicating TPMIs of the respective frequency parts are introduced in DCI format 0_1/0_2.

It is preferable that discussions 1/2 be applied to NCB based PUSCH. It is preferable that the SRI indication in the DCI be enhanced to the plurality of frequency parts for the NCB based PUSCH.

Regarding the UL MIMO enhancement supporting more than four layers, discussion 4 below is under study.

[Discussion 4]

SRI field enhancement. This enhancement complies with any of discussions 4-1 and 4-2 below.

[[Discussion 4-1]]

The UE can be configured with up to 6/8 1-port SRS resources in one SRS resource set for up to 6/8 layers.

[[Discussion 4-2]]

The UE can be configured with two SRS resource sets including up to four 1-port SRS resources for each SRS resource set for up to 6/8 layers.

It is preferable that a case of a PUSCH having two CWs be considered in the SRI indication in the DCI for Y frequency parts.

However, details of an operation controlling the precoding application based on a given frequency unit have not been sufficiently studied. Unless the precoding is adequately applied, throughput reduction or communication quality degradation may occur. Thus, the inventors of the present invention came up with the idea of a method for adequately performing UL transmission (for example, PUSCH transmission) even in the case of supporting the frequency selective precoding.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may refer to "at least one of A, B, and C."

In the present disclosure, activate, deactivate, indicate (or specify), select, configure, update, determine, and the like may be interchangeably interpreted. In the present disclosure, support, control, controllable, operate, operable, and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, DMRS port group), a group (for example, a spatial relation group, code division multiplexing (CDM) group, a reference signal group, a CORESET group, a Physical Uplink Control Channel (PUCCH) group, a PUCCH resource group), a resource (for example, reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, a quasi-co-location (QCL), a QCL assumption and the like may be interchangeably interpreted.

In the present disclosure, a single TRP, a single TRP system, a single TRP transmission, and a single PDSCH may be interchangeably interpreted. In the present disclosure, multi-TRP, multi-TRP system, multi-TRP transmission, and multi-PDSCH may be interchangeably interpreted. In the present disclosure, a single DCI, a single PDCCH, a single DCI based multi-TRP, and two TCI states on at least one TCI codepoint being activated may be interchangeably interpreted.

In the present disclosure, a single TRP, a channel using a single TRP, a channel using one TCI state/spatial relation, multi-TRP being not enabled by the RRC/DCI, a plurality of TCI states/spatial relations being not enabled by the RRC/DCI, and one CORESET pool index (CORESETPoolIndex) value being not configured for any CORESET and any codepoint in a TCI field being not mapped to two TCI states may be interchangeably interpreted.

In the present disclosure, multi-TRP, a channel using multi-TRP, a channel using a plurality of TCI states/spatial relations, multi-TRP being enabled by the RRC/DCI, a plurality of TCI states/spatial relations being enabled by the RRC/DCI, and at least one of single DCI based multi-TRP and multi-DCI based multi-TRP may be interchangeably interpreted. In the present disclosure, multi-DCI based multi-TRP, and one CORESET pool index (CORESETPoolIndex) value being configured for a CORESET may be interchangeably interpreted. In the present disclosure, single DCI based multi-TRP, and at least one codepoint in a TCI field being mapped to two TCI states may be interchangeably interpreted.

In the present disclosure, TRP #1 (first TRP) may correspond to CORESET pool index = 0, or may correspond to the first TCI state of two TCI states corresponding to one codepoint in a TCI field. TRP #2 (second TRP) TRP #1 (first TRP) may correspond to CORESET pool index = 1, or may correspond to the second TCI state of two TCI states corresponding to one codepoint in a TCI field.

In the present disclosure, single DCI (sDCI), a single PDCCH, a single DCI based multi-TRP system, sDCI based MTRP, and two TCI states on at least one TCI codepoint being activated may be interchangeably interpreted.

In the present disclosure, multi-DCI (mDCI), multi-PDCCH, a multi-DCI based multi-TRP system, mDCI based MTRP, and two CORESET pool indices or CORESET pool index = 1 (or a value more than 1) being configured may be interchangeably interpreted.

In the present disclosure, an index, an ID, an indicator, and a resource ID may be interchangeably interpreted.

In the present disclosure, single DCI (sDCI), a single PDCCH, a single DCI based multi-TRP (MTRP) system, sDCI based MTRP, scheduling a plurality of PUSCHs (corresponding to different SRIs) by one DCI, sDCI based MTRP transmission, and two TCI states on at least one TCI codepoint being activated may be interchangeably interpreted.

In the present disclosure, multi-DCI (mDCI), multi-PDCCH, a multi-DCI based multi-TRP system, mDCI based MTRP, mDCI based MTRP transmission, multi-DCI being used for MTRP, scheduling a plurality of PUSCHs (corresponding to different SRIs) by two DCIs, and two CORESET pool indices or CORESET pool index = 1 (or a value more than 1) being configured may be interchangeably interpreted.

In the present disclosure, a repetition (one repetition), an occasion, and a channel may be interchangeably interpreted. In the present disclosure, UL data, a TB, a CW, and UCI may be interchangeably interpreted.

In the present disclosure, two CWs/TBs transmitted using PUSCH may be CWs/TBs having different contents, or CWs/TBs having the same contents. The PUSCH transmitting two CWs/TBs may be considered as one PUSCH simultaneously or repeatedly transmitted.

In the present disclosure, a frequency part, a subband, one or more RBs, one or more PRBs, an RBG, and a PRG may be interchangeably interpreted.

In the present disclosure, an SRI field, a TPMI field, a "precoding information and number of layers" field, an existing SRI field, an existing TPMI field, an existing "precoding information and number of layers" field, a new SRI field, a new TPMI field, and a new "precoding information and number of layers" field may be interchangeably interpreted.

The DCI in the embodiments below may be limited to a specific DCI format among the DCI formats for scheduling a PUSCH (for example, DCI formats 0_0, 0_1, 0_2), or may correspond to a plurality of DCI formats. Note that in a case of corresponding to the plurality of DCI formats, control common to the DCI formats (identical control, identical processing) may be performed, or control different from one DCI format to another may be performed.

In the embodiments below, "plurality" and "two" may be interchangeably interpreted.

The PUSCH transmission in the embodiments below may or may not be on the assumption that a plurality of panels are used (may be applied regardless of the panel).

In the description below, the PUSCH transmission is described as an example of UL transmission without limitation. The description may be applied to a channel/signal on which the frequency selective precoding is performed. The description below describes the frequency selective precoding, but may be similarly applied to a precoding in a time direction (time selective precoding).

The number of frequency parts (subbands) may be defined in the specification, configured, or reported as the UE capability by the UE.

(Radio Communication Method)

The UE may receive a configuration of an SRS resource set, and receive DCI including a plurality of indications of SRS resources in the SRS resource set. One of the plurality of indications may be a field/existing SRI field/new SRI field. The UE may apply the plurality of indications to a plurality of frequency parts used for non-codebook transmission of UL transmission (for example, PUSCH).

The UE may receive a single first indication for a wideband precoding (W1) and a plurality of second indications for a subband precoding (W2). The UE may apply the single first indication and the plurality of second indications to codebook transmission of UL transmission (for example, PUSCH). The first indication may be a field in the RRC IE/MAC CE/DCI (for example, existing field/existing "precoding information and number of ranks" field/new field/new TPMI field). One of the plurality of second indications may be a field in the DCI (for example, new field/new TPMI field).

<First Embodiment>

In this embodiment, the granularity/number Y of the frequency part for the UL frequency selective precoding (e.g., frequency selective precoding) for UL transmission of PUSCH or the like may be configured, or may be defined in the specification, or may be reported as the UE capability by the UE. The UL frequency selective precoding for NCB based PUSCH may be supported/enabled.

This embodiment relates to SRI indications for Y frequency parts.

The existing SRI field in DCI format 0_1/0_2 may be used to (implicitly) indicate a rank and a precoder for the first frequency part.

For the remaining (Y - 1) (from the second to the Y-th) frequency parts, the new SRI fields may be used to indicate the respective frequency parts.

Each new SRI field may comply with any of fields 1 and 2 descried below.

[Field 1]

A size of each new SRI field is the same as a size of the existing SRI field.

[Field 2]

A size and value of each new SRI field depends a rank r indicated by an SRI for the first frequency part.

For example, in a case that r = 1 with one SRS resource is indicated by the SRI for the first frequency part, the rank is considered to be the same over the all frequency parts, and one SRS resource (SRS resource #0, #1, ..., #$N_{SRS}$ - 1) needs to be indicated to each of the remaining frequency parts. Thus, the indication has $N_{SRS}$ cases.

For example, in a case that r = 2 with two SRS resources is indicated by the SRI for the first frequency part, two SRS resources from among the SRS resources #0, #1, ..., #$N_{SRS}$ - 1 need to be indicated to each of the remaining frequency parts. Thus, the indication has $C(N_{SRS}, r)$ cases. The size of each new SRI field is $\mathrm{ceil}(\log_2(C(N_{SRS}, r)))$. Here, $N_{SRS} >= r$, and $L_{max} >= r$.

For example, in a case that r = 3 with three SRS resources is indicated by the SRI for the first frequency part, three SRS resources from among the SRS resources #0, #1, ..., #$N_{SRS}$ - 1 need to be indicated to each of the remaining frequency parts. Thus, the indication has $C(N_{SRS}, r)$ cases. The size of each new SRI field is $\mathrm{ceil}(\log_2(C(N_{SRS}, r)))$. Here, $N_{SRS} >= r$, and $L_{max} >= r$.

For example, in a case that r = 4 with four SRS resources is indicated by the SRI for the first frequency part (that occurs only in a case of $N_{SRS}$ = 4, and $L_{max}$ = 4), only one case (SRS resources #0, #1, #2, #3) is for each of the remaining frequency parts. Thus, an SRI for another frequency part (new SRI field) need not be additionally indicated.

However, the DCI size for each new SRI field is preferably fixed with respect to a different rank indication for given values of $N_{SRS}$ and $L_{max}$. Considering a different value of r, the maximum number of the indication cases is $\max(C(N_{SRS}, r))$, where $N_{SRS} >= r$ and $L_{max} >= r$, and r may start from 0. The size of each new SRI field may be $\max(\mathrm{ceil}(\log_2(C(N_{SRS}, r))))$ or $\mathrm{ceil}(\log_2(\max(C(N_{SRS}, r))))$, $N_{SRS} >= r$, $L_{max} >= r$.

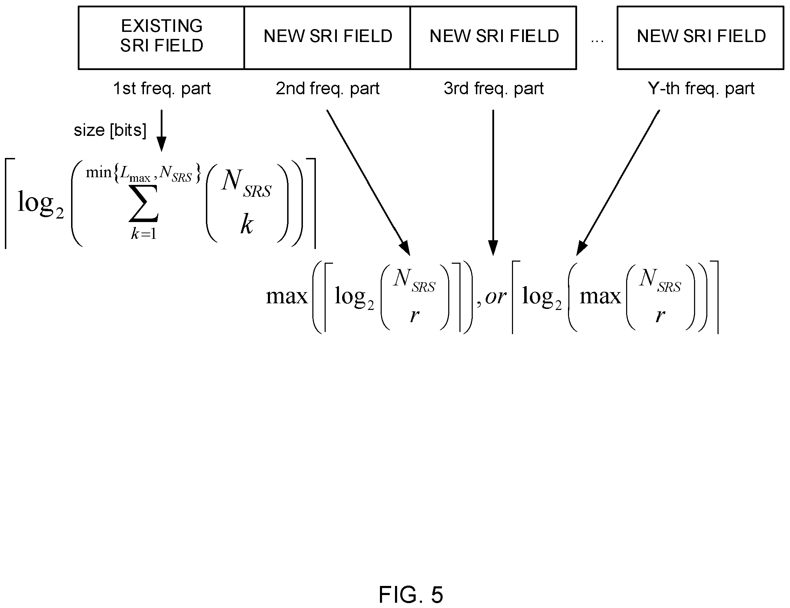

As illustrated in the example of FIG. 5, regarding Y frequency parts, the DCI may include the existing SRI field for the first frequency part and the new SRI field for each of the second to Y-th frequency parts. The size of the existing SRI field may be given by Expression 1 described above. The size of each new SRI field may be $\max(\mathrm{ceil}(\log_2(C(N_{SRS}, r))))$ or $\mathrm{ceil}(\log_2(\max(C(N_{SRS}, r))))$ bits.

Option 2 can suppress the size of each new SRI field compared to option 1.

A greater value of $N_{SRS}/L_{max}$ may be supported for PUSCH having more than four layers/ranks.

[Example 1]

In the case of $N_{SRS}$ = 4 and $L_{max}$ = 4, a 4-bit existing SRI field may indicate the first frequency part.

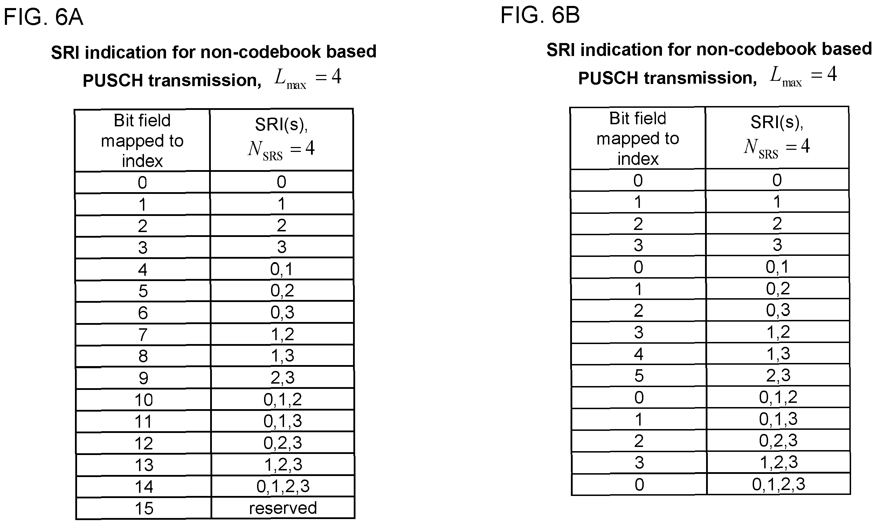

FIG. 6A illustrates an example of association between a value of the existing SRI field (index) for the first frequency part and one or more SRIs. FIG. 6B illustrates an example of association between values of the new SRI fields (indices) for the second and subsequent frequency parts and one or more SRIs.

In a case that any of the existing SRI field indices = 0 to 3 is indicated to the first frequency part, r = 1 is indicated. There are only four cases for the SRS resources further indicated to other frequency parts, the size needed for each new SRI field is $\mathrm{ceil}(\log_2(C(N_{SRS}, 1)))$ = 2 bits. In this case, the new SRI field indices = 0 to 3 correspond to the existing SRI field indices = 0 to 3, respectively.

In a case that any of the existing SRI field indices = 4 to 9 is indicated to the first frequency part, r = 2 is indicated. There are only six cases for the SRS resources further indicated to other frequency parts, the size needed for each new SRI field is ceil (log$_2$(C(N$_{SRS}$, 2))) = 3 bits. In this case, the new SRI field indices = 0 to 6 correspond to the existing SRI field indices = 4 to 9, respectively.

In a case that any of the existing SRI field indices = 10 to 13 is indicated to the first frequency part, r = 3 is indicated. There are only four cases for the SRS resources further indicated to other frequency parts, the size needed for each new SRI field is ceil (log$_2$(C(N$_{SRS}$, 3))) = 2 bits. In this case, the new SRI field indices = 0 to 3 correspond to the existing SRI field indices = 10 to 13, respectively.

In a case that the existing SRI field index = 14 is indicated to the first frequency part, r = 4 is indicated. The SRS resources for other frequency parts are only the SRS resources #0, #1, #2, #3. An additional indication (field, bit) need not be used. The new SRI field index = 0 may corresponds to the existing SRI field index = 0 (SRS resources #0, #1, #2, #3).

However, the size of each new SRI field is preferably fixed to max(ceil(log$_2$(C(N$_{SRS}$, r)))) = 3 bits with respect to N$_{SRS}$ = 4, L$_{max}$ = 4, and a different rank indication r = 1/2/3/4. In this case, the value of each new SRI field (index) may comply with the following.

- In a case that the existing SRI field for the first frequency part indicates r = 1, only values of 0 to 3 indicated by a 3-bit new SRI field may be valid.
- In a case that the existing SRI field for the first frequency part indicates r = 2, only values of 0 to 5 indicated by a 3-bit new SRI field may be valid.
- In a case that the existing SRI field for the first frequency part indicates r = 3, only values of 0 to 3 indicated by a 3-bit new SRI field may be valid.
- In a case that the existing SRI field for the first frequency part indicates r = 4, only a value of 0 indicated by a 3-bit new SRI field may be valid. Alternatively, in a case that the SRI for the first frequency part indicates r = 4, there may be no valid value of a 3-bit new SRI field. In this case, the UE may assume that the values of the respective new SRI fields for the second and subsequent frequency parts are the same as the value of the existing SRI field for the first frequency part.

[Example 2]

In a case of N$_{SRS}$ = 3 and L$_{max}$ = 2, a 3-bit existing SRI field may indicate the first frequency part.

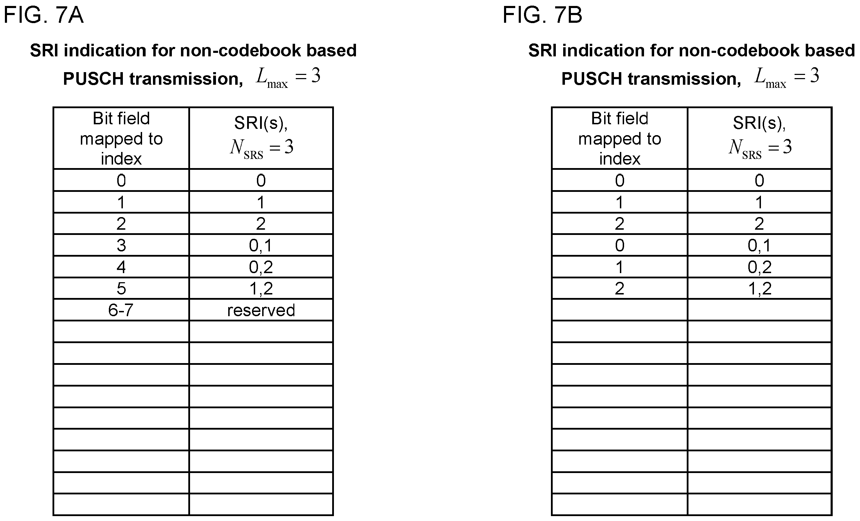

FIG. 7A illustrates an example of association between a value of the existing SRI field (index) for the first frequency part and one or more SRIs. FIG. 7B illustrates an example of association between values of the new SRI fields (indices) for the second and subsequent frequency parts and one or more SRIs.

In a case that any of the existing SRI field indices = 0 to 2 is indicated to the first frequency part, r = 1 is indicated. There are only three cases for the SRS resources further indicated to other frequency parts, the size needed for each new SRI field is ceil (log$_2$(C(N$_{SRS}$, 1))) = 2 bits. In this case, the new SRI field indices = 0 to 2 correspond to the existing SRI field indices = 0 to 2, respectively.

In a case that any of the existing SRI field indices = 3 to 5 is indicated to the first frequency part, r = 2 is indicated. There are only three cases for the SRS resources further indicated to other frequency parts, the size needed for each new SRI field is ceil (log$_2$(C(N$_{SRS}$, 2))) = 2 bits. In this case, the new SRI field indices = 0 to 2 correspond to the existing SRI field indices = 3 to 5, respectively.

However, the size of each new SRI field is preferably fixed to max (ceil(log$_2$(C(N$_{SRS}$, r)))) = 2 bits with respect to N$_{SRS}$ = 3, L$_{max}$ = 2, and a different rank indication r = 1/2. In this case, the value of each new SRI field (index) may comply with the following.

- In a case that the existing SRI field for the first frequency part indicates r = 1, only values of 0 to 2 indicated by a 3-bit new SRI field may be valid.
- In a case that the existing SRI field for the first frequency part indicates r = 2, only values of 0 to 2 indicated by a 3-bit new SRI field may be valid.

<<Mapping of SRI Field and Frequency Part>>

Mapping of the SRI field (existing SRI field/new SRI field) and the frequency part (subband) may comply with any of mappings 1 and 2 below.

[Mapping 1]

One SRI field is mapped to one frequency part.

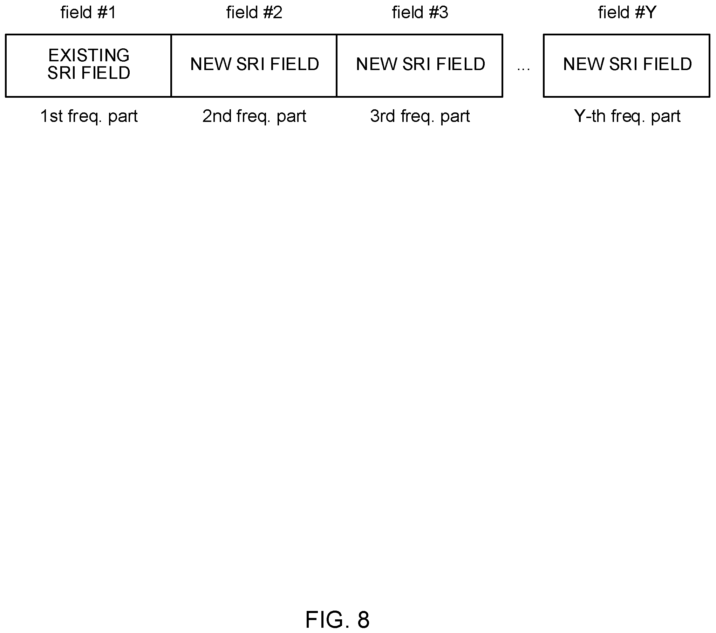

In an example of FIG. 8, Y fields in the DCI (fields #1, #2, ..., #Y) correspond to Y frequency parts (frequency parts #1, #2, ..., #Y), respectively. The first field (field #1) is the existing SRI field, and each of the second and subsequent fields (field #2, ..., #Y) is the new SRI field.

[Mapping 2]

One SRI field is mapped to a plurality of frequency parts.

For each frequency part, association between the value of the SRI field (index) and the SRI (SRS resource ID) may be defined in the specification, or configured.

The number of SRI fields using mapping 2 is smaller than the number of SRI fields using mapping 1.

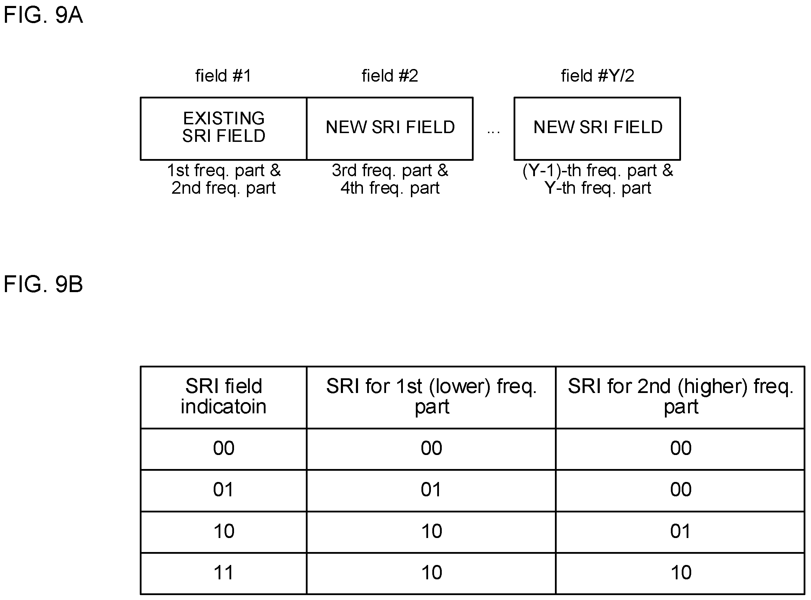

In an example of FIG. 9A, among Y/2 fields in the DCI (field #1, #2, ..., #Y/2), the first field (field #1) is the existing SRI field, and each of the second and subsequent fields (field #2, ..., #Y/2) is the new SRI field. Field #1 corresponds to frequency parts #1 and #2. Field #2 corresponds to frequency parts #3 and #4. Field #Y/2 correspond to frequency parts #Y - 1 and #Y.

In an example of FIG. 9B, association between a value of each of Y/2 fields, a value of the first SRI field index in two SRIs corresponding to the relevant field, and a value of the second SRI field index in two SRIs corresponding to the relevant field may be defined in the specification, or configured.

According to this embodiment, the UE can adequately determine the SRS resources corresponding to a plurality of frequency parts for NCB based transmission.

<Second Embodiment>

This embodiment relates to SRI indications in the DCI for Y frequency parts for PUSCH carrying two TBs/CWs.

In a case that two sets of SRI fields are needed for two TBs/CWs transmitted on PUSCH, the first embodiment may be applied to each of the sets of SRI fields. In this case, a layer indicated by the SRI for the first frequency part may be used for each TB/CW. The same layer may be assumed for each TB/CW over the all frequency parts.

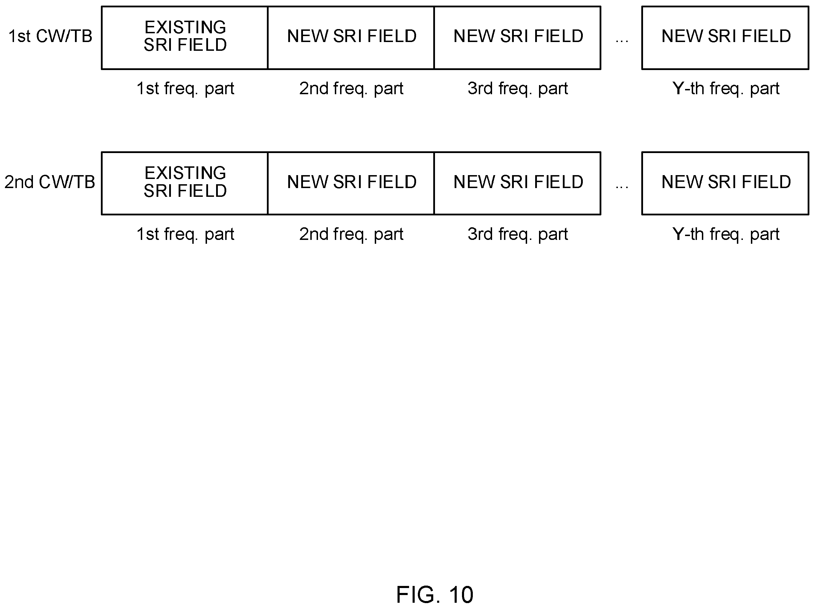

FIG. 10 illustrates an example in which mapping 1 according to first embodiment is used for each CW/TB. Y fields for the first CW/TB (fields #1, #2, ..., #Y) correspond to Y frequency parts (frequency parts #1, #2, ..., #Y), respectively. Y fields for the second CW/TB (fields #1, #2, ..., #Y) correspond to Y frequency parts (frequency parts #1, #2, ..., #Y), respectively.

According to this embodiment, even in a case of transmitting NCB based PUSCH carrying a plurality of TBs/CWs, the UE can adequately determine the SRS resources corresponding to a plurality of frequency parts.

<Analysis>

An example of a procedure based on the first embodiment is described.

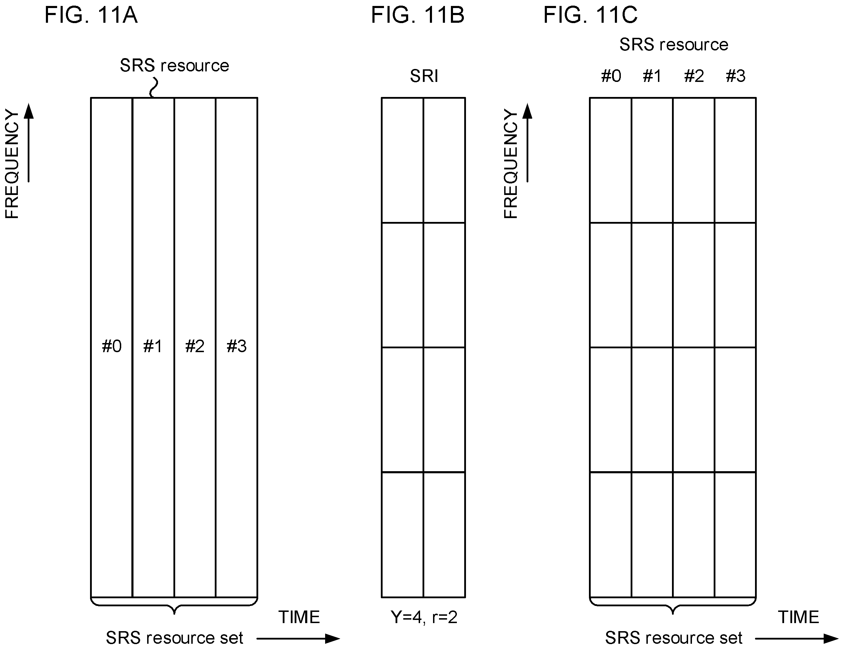

As is in an example in FIG. 11A, the UE performs transmission based on the SRS resources #0, #1, #2, and #3. Each resource set may be associated with the NZP CSI-RS. The base station indicates two SRS resources to each frequency part for NCB based PUSCH. A precoder for the same four SRS resources is selected for each frequency part. As is in an example in FIG. 11B, eight SRIs (SRS resource IDs) for four frequency parts and two layers ($Y = 4$, $r = 2$) are indicated by the DCI.

In consideration of a frequency selective channel, in a case that precoders of SRS for selection may be different from each other for frequency parts as is in an example in FIG. 11C, performance may be improved. The precoders on the different frequency parts may be based on measurement of the DL CSI-RS on the different frequency parts by the UE. How such an operation is performed is an issue.

<Third Embodiment>

This embodiment relates to an SRS resource configuration for NCB based transmission. The SRS resource configuration may comply with at least one of aspects 3-1 and 3-2 below.

<<Aspect 3-1>>

The SRS resources in one SRS resource set may be precoded at levels of one or more frequency parts. The precoding granularity may correspond to one or X frequency parts. This operation may be referred to as a frequency part level precoding, a frequency part precoding, a subband level precoding, a subband precoding, or the like.

In the present disclosure, X frequency parts may be referred to as a subband, a frequency part group, or the like.

The frequency part level precoding may be configured/enabled /disabled through RRC signaling depending on the UE capability report.

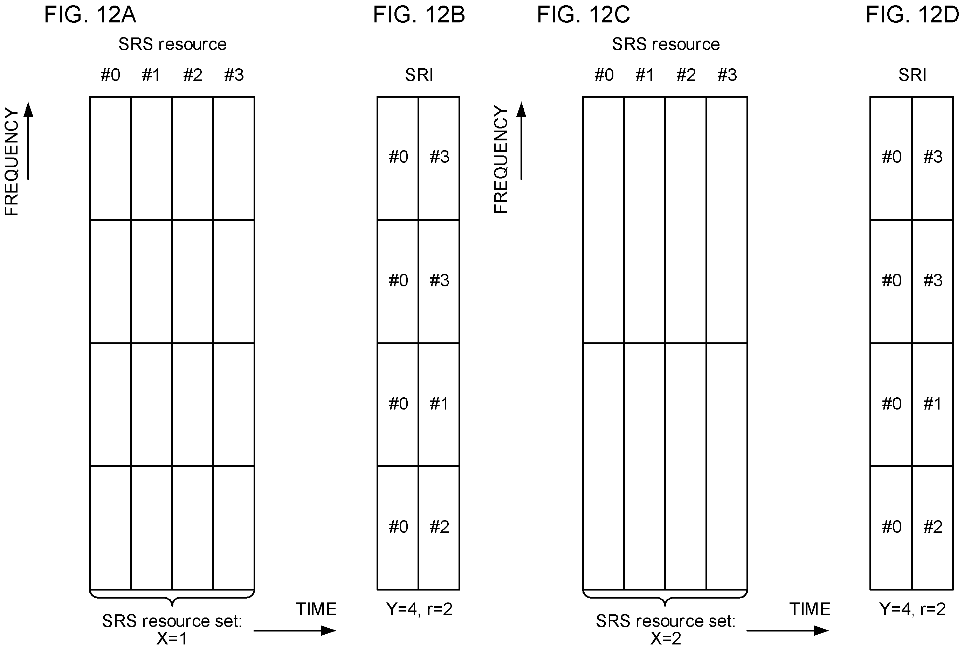

FIG. 12A illustrates an example in which precoding at a level of one frequency part is configured for the SRS resource set (SRS resources #0 to #3) (X = 1). SRS resource #0 has a spatial QCL the same as an associated NZP CSI-RS, and has different precodings (digital beam forming) for frequency parts. As is in an example in FIG. 12B, eight SRIs (SRS resource IDs) for four frequency parts and two layers (Y = 4, r = 2) are indicated by the DCI.

As is in an example in FIG. 12B, in a case that the SRI fields in the DCI indicate the SRS resources (#0, #1) for the first frequency part and SRS resources (#0, #3) for the fourth frequency part, the UE may apply the same precoder as the SRS resource indicated to each frequency part. In other words, in a case that different precodings are used by UE to the SRS resources for the first and fourth frequency parts, the different precodings may be applied to PUSCHs for the first and fourth frequency parts.

Because the SRS precoding is performed by the UE, aspect 3-1 may depend on UE implementation. In consideration of UE complexity, at least one of new UE capability and new RRC signaling indicating at least one of whether or not the UE supports/enables the frequency part level precoded SRS, the frequency part level precoding granularity, and the number of frequency part level precodings may be introduced.

FIG. 12C illustrates an example in which precodings at levels of two frequency parts are configured for the SRS resource set (SRS resources #0 to #3) (X = 2). SRS resource #0 has a spatial QCL the same as an associated NZP CSI-RS, and has a precoding (digital beam forming) different from frequency part to another. As is in an example in FIG. 12D, eight SRIs (SRS resource IDs) for four frequency parts and two layers (Y = 4, r = 2) are indicated by the DCI.

<<Aspect 3-2>>

An SRS resource group (one or X SRS resources) for precodings at levels of one or more frequency parts is introduced. The precoding granularity may be one or X frequency parts. This operation may also be referred to as a frequency part level precoding, a frequency part precoding, a subband precoding, or the like.

The frequency part level precoding may be configured/enabled /disabled through RRC signaling depending on the UE capability report.

Each SRS resource group may correspond to 1 or X frequency parts. Each SRS resource group may be configured to include up to four 1-port SRS resources, or may be configured to include more than four 1-port SRS resources.

The SRS resource is a narrow band (bandwidth of frequency part). All SRS resources in the same SRS resource set for NCB are in the same spatial QCL as the associated SRS resource set.

The maximum number of SRS resource groups in each SRS resource set may be Z. Z and Y may be Z = Y, or Z < Y. Z may depend on the UE capability signaling.

The maximum number of SRS resources in each SRS resource set may be Z * G, or may depend on the UE capability signaling. G may be the number of SRS resources per group.

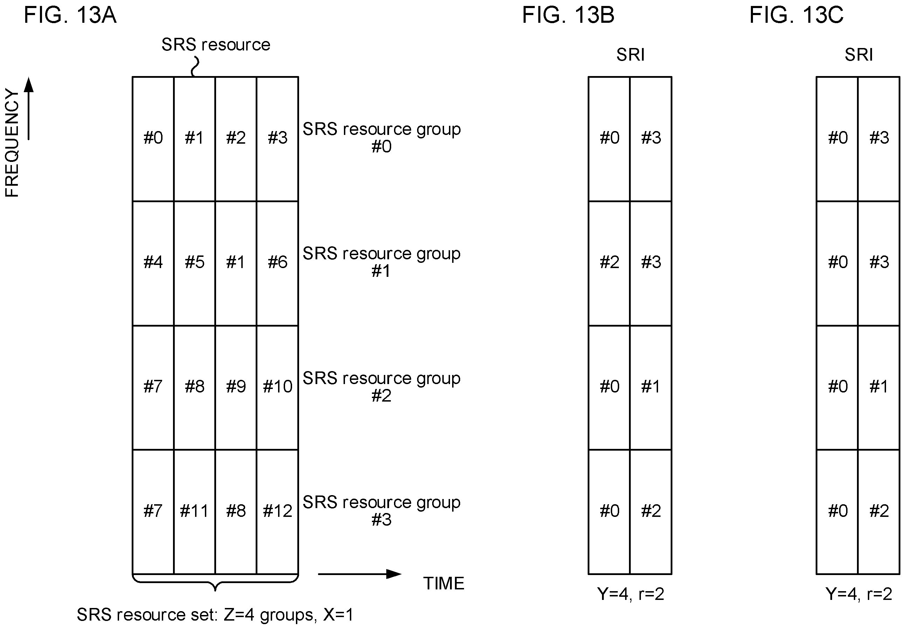

FIG. 13A illustrates an example in which four SRS resource groups (SRS resource groups #0 to #3) respectively corresponding to four frequency parts are configured for the SRS resource set (SRS resources #0 to #3) (Z = 4, X = 1). Eight SRIs (new IDs) are indicated to four frequency parts and two layers (Y = 4, r = 2) by the DCI.

In this case, the SRI field in the DCI (one or more SRIs associated with the SRI fields) may not indicate the actual SRS resource ID, but instead, may indicate a new ID (renumbered) indicating the SRS resource in each SRS resource group for each frequency part. As is in an example in FIG. 13B, the ID (#0, #1, #2, #3) indicated by the SRI may be renumbered in an order of the SRS resources in the corresponding SRS resource group. As is in an example in FIG. 13C, the ID (#0, #1, #2, #3) indicated by the SRI may be renumbered in an order from the lowest ID toward the highest ID of the SRS resource IDs in the corresponding SRS resource group.

A plurality of SRS resources respectively corresponding to a plurality of frequency parts may be a plurality of SRS resources in the same SRS resource set. The SRS resource set may have an NCB usage.

[Variation]

The SRS resource group in the SRS resource set may be transmitted using a TDM scheme. It may be defined that the UE does not assume that the SRS resource groups for different frequency parts in the SRS resource set overlap in symbols.

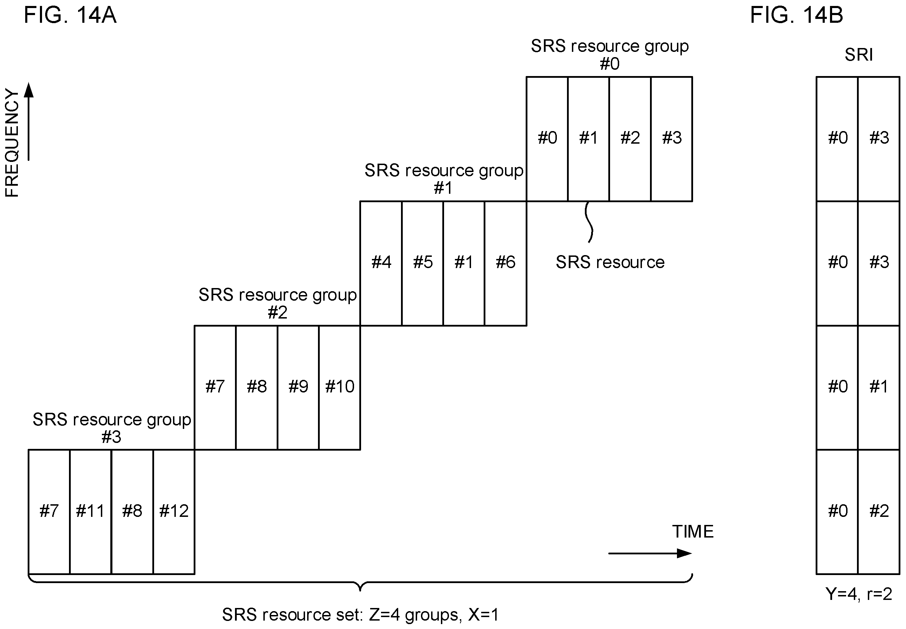

FIG. 14A illustrates an example in which four SRS resource groups (SRS resource groups #0 to #3) corresponding to four frequency parts are configured for the SRS resource set (SRS resources #0 to #3) (Z = 4, X = 1). The SRS resource groups #0 to #3 are transmitted at different times from each other (not overlapping). As illustrated in FIG.

14B, eight SRIs (new IDs) are indicated to four frequency parts and two layers (Y = 4, r = 2) by the DCI. The IDs (#0, #1, #2, #3) indicated by the SRI may be renumbered in an order from the lowest ID toward the highest ID of the SRS resource IDs in the corresponding SRS resource group.

A plurality of SRS resources in different RBs (from the SRS resource set) may be simultaneously transmitted in one (same) symbol. A new UE capability indicating that the UE supports this simultaneous transmission function may be defined. A new UE capability indicating that the maximum number of the plurality of SRS resources may be defined. In a case that the simultaneous transmission function is supported, a network may configure some SRS resources for different frequency parts overlapping in one symbol in accordance with the UE capability.

At least one of the first and second embodiments may be applied to the TPMI field/"precoding information and number of layers" field in CB based PUSCH.

According to this embodiment, the UE can adequately determine the SRS resources corresponding to a plurality of frequency parts for NCB based transmission.

<Fourth Embodiment>

This embodiment relates to CB based transmission.

In discussion 3 described above, a study is underway to use (Y - 1) new fields for indicating TPMIs of (Y - 1) frequency parts. However, an indication method of TPMI for the frequency selective precoding have not been sufficiently studied.

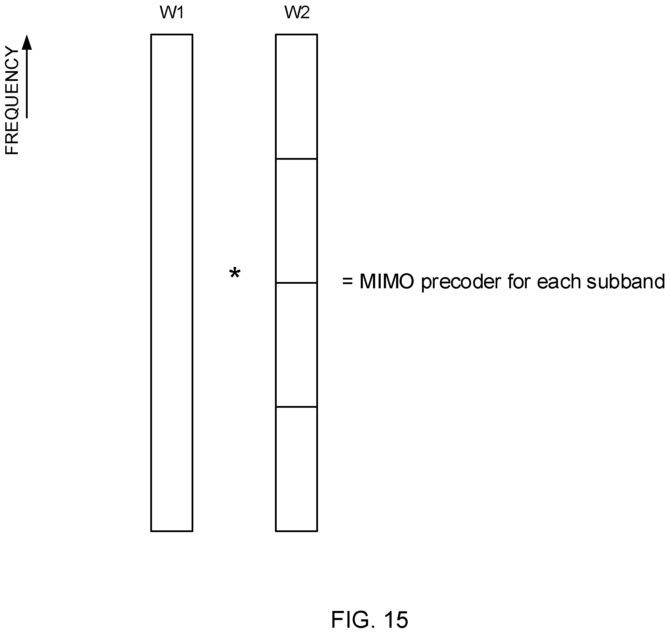

A dual-stage codebook for UL frequency selective precoding W = W1 * W2 may be introduced/defined. Here, as illustrated in FIG. 15, W1 means a long-term PMI or a wideband PMI, and W2 means a short-term PMI or a subband PMI.

The UE may comply with at least one of aspects 4-1- and 4-2 below.

<<Aspect 4-1>>

In a case of using the dual-stage codebook, the existing field of "precoding information and number of layers" may be used for indications of a rank and TPMI of W1. Y new TPMI fields may be introduced to indications of W2 PMIs for the respective frequency parts.

The PMIs need to be and the RIs need not be indicated to Y TPMI fields, so a new table may be used. The new table may indicate an association between a value of an index indicated by the TPMI field and a TPMI for each rank.

<<Aspect 4-2>>

W1 (because of long term) may be indicated in the RRC IE/MAC CE. The DCI may indicate only W2 for each frequency part of W1 and W2. The DCI may comply with at least one of DCI 1 and DCI 2 below.

[DCI 1]

The existing field of "precoding information and number of layers" is used for indications of a rank and TPMI of W2 for the first frequency part. (Y - 1) new TPMI fields may be introduced to indications of W2 for the remaining frequency parts.

[DCI 2]

(Y - 1) new TPMI fields or Y new TPMI fields may be introduced to indications of W2 for the respective frequency parts. The existing field of "precoding information and number of layers" may not be needed.

According to this embodiment, the UE can adequately determine the precoders (for example, TPMI) corresponding to a plurality of frequency parts for CB based transmission.

<Other Embodiments>

<<UE Capability Information/Higher Layer Parameter>>

The higher layer parameters (RRC IE)/UE capability corresponding to the functions (features) according to the embodiments described above may be defined. The higher layer parameter may indicate whether or not to enable the functions. The UE capability may indicate whether or not the UE supports the functions.

The UE configured with the higher layer parameter corresponding to the function may perform the function. It may be defined that "the UE not configured with the higher layer parameter corresponding to the function does not perform the function (for example, complying with Rel. 15/16)".

The UE reporting/transmitting the UE capability indicating that the function is supported may perform the function. It may be defined that "the UE not reporting the UE capability indicating that the function is supported does not perform the function (for example, complying with Rel. 15/16)".

In a case that the UE reports/transmits the UE capability indicating that the function is supported and is configured with the higher layer parameter corresponding to the function, the UE may perform the function. It may be defined that "in a case that the UE does not report/transmit the UE capability indicating that the function is supported, or is not configured with the higher layer parameter corresponding to the function, the UE does not perform the function (for example, complying with Rel. 15/16)".

Which embodiment/option/choice/function in the plurality of embodiments described above is used may be configured by the higher layer parameter, reported as the UE capability to the UE, defined in the specification, or determined by the reported UE capability and the configuration by the higher layer parameter.

The UE capability may indicate whether or not to support at least one of the functions below.

- Frequency selective precoding for UL transmission (for example, PUSCH) for a condition (for example, at least one condition of BW, antenna port, rank, frequency range, and $N_{SRS}$). The UL transmission may be an NCB based PUSCH or a CB based PUSCH.
- A plurality of SRI fields in the DCI for the frequency selective precoding for UL transmission.
- PUSCH carrying two CWs/TBs.
- SRS with frequency part (subband/PRG) for NCB being precoded.
- Dual-stage UL codebook for frequency selective precoding for PUSCH.
- W1 indication by the MAC CE.
- Indications classified into W1 and W2.
- A plurality of W2 corresponding to a plurality of frequency parts.

The UE capability may indicate at least one of the followings.

- Maximum number of frequency parts for frequency selective precoding for UL transmission (for example, PUSCH) for a condition (for example, at least one condition of BW, antenna port, rank, frequency range, and $N_{SRS}$). The UL transmission may be an NCB based PUSCH or a CB based PUSCH.
- The (maximum) number of frequency parts (subbands/PRGs).
- Granularity of the frequency part (subband/PRG).

According to the UE capability/higher layer parameter described above, the UE can achieve the above functions while maintaining compatibility with the existing specifications.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

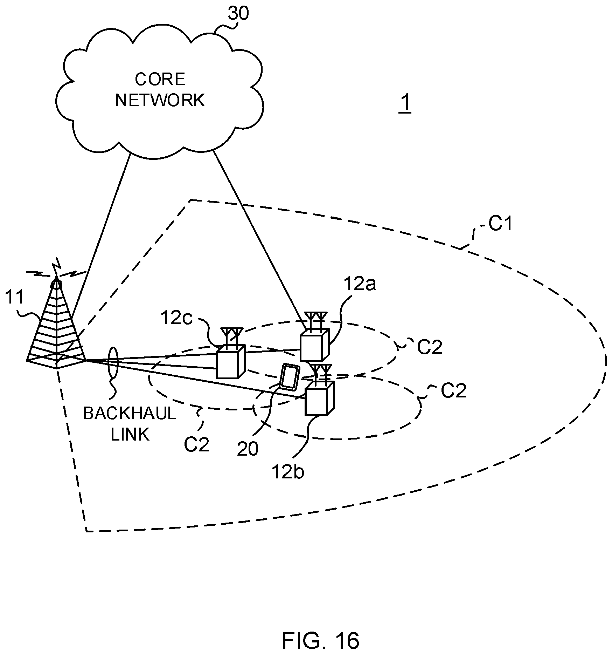

FIG. 16 is a diagram to illustrate an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect illustrated in the diagram.

Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

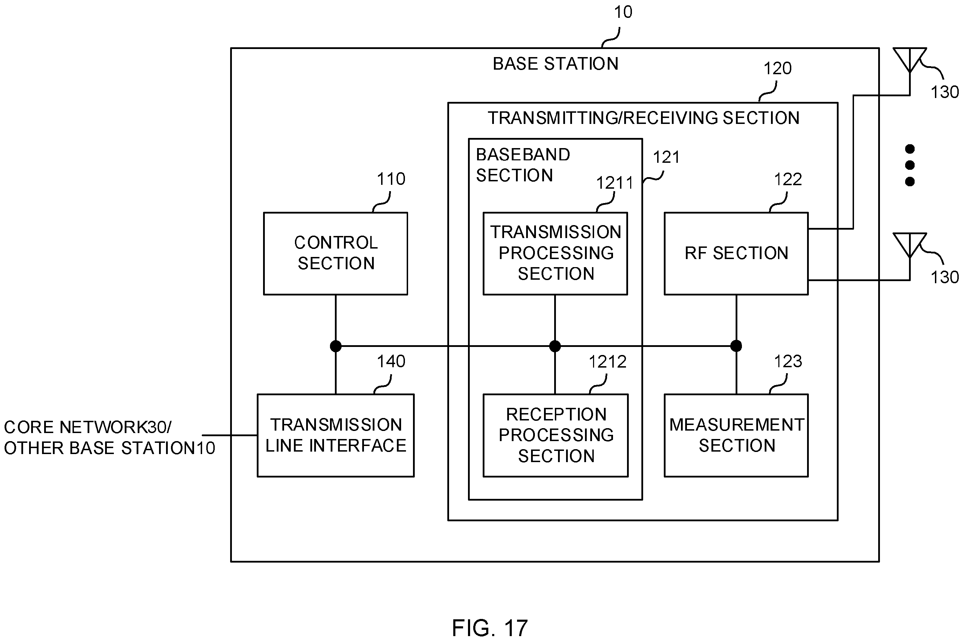

FIG. 17 is a diagram to illustrate an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily illustrates functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a configuration of a sounding reference signal (SRS) resource set, and transmit downlink control information including a plurality of indications of SRS resources in the SRS resource. The control section 110 may apply the plurality of indications to a plurality of respective frequency parts used for a reception of a non-codebook transmission of a physical uplink shared channel.

Note that the transmitting/receiving section 120 may transmit a single first indication for a wideband precoding and a plurality of second indications for a subband precoding. The control section 110 may apply the single first indication and the plurality of second indications to a reception of a codebook transmission of a physical uplink shared channel.

(User Terminal)

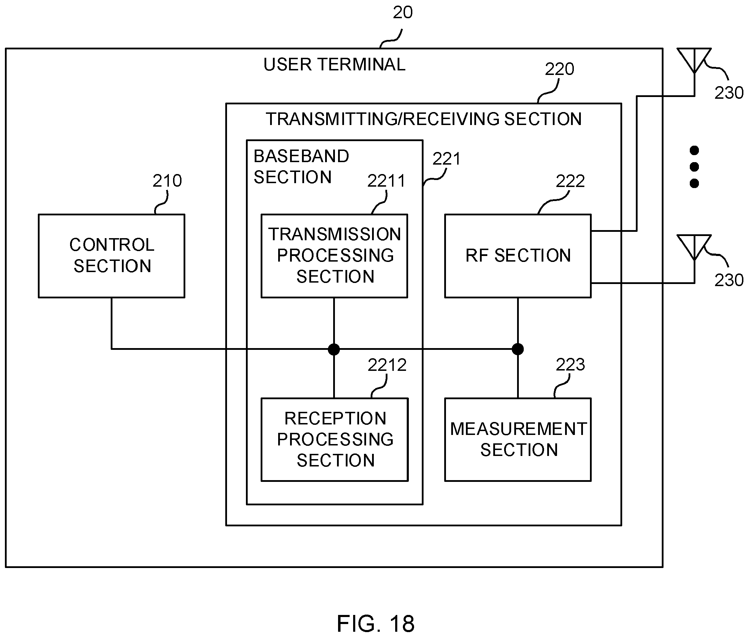

FIG. 18 is a diagram to illustrate an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily illustrates functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a configuration of a sounding reference signal (SRS) resource set, and receive downlink control information including a plurality of indications of SRS resources in the SRS resource set. The control section 210 may apply the plurality of indications to a plurality of respective frequency parts used for a non-codebook transmission of a physical uplink shared channel.

The number of the plurality of frequency parts may be Y. The downlink control information may include Y or Y/2 fields for the SRS resources.

The physical uplink shared channel may include two codewords. The number of the plurality of frequency parts may be Y. The downlink control information may include 2Y fields for the SRS resources.

Each of the SRS resources in the SRS resource set may use a part of a band of the physical uplink shared channel.

Note that the transmitting/receiving section 220 may receive a single first indication for a wideband precoding and a plurality of second indications for a subband precoding. The control section 210 may apply the single first indication and the plurality of second indications to a codebook transmission of a physical uplink shared channel.

The plurality of second indications may correspond to a plurality of respective frequency parts used for the codebook transmission.

The transmitting/receiving section 220 may receive downlink control information including one field indicating the single first indication and a plurality of fields indicating the plurality of respective second indications.

The transmitting/receiving section 220 may receive a radio resource control (RRC) information element (IE) or a medium access control (MAC) control element (CE) indicating the single first indication, and receive downlink control information including the plurality of fields indicating the plurality of respective second indications.

(Hardware Structure)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

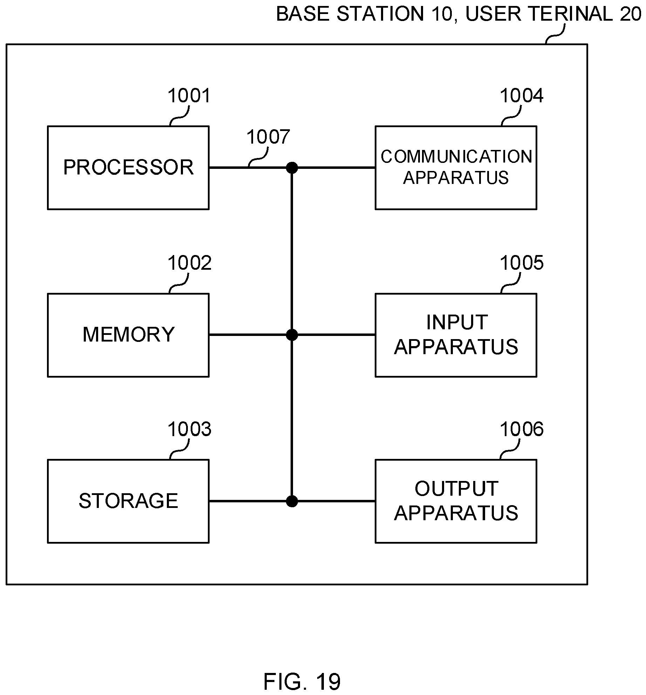

For example, a base station, a user terminal, and so on according to one embodiment of the present disclosure may function as a computer that executes the processes of the radio communication method of the present disclosure. FIG. 19 is a diagram to illustrate an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses illustrated in the drawings, or may be configured not to include part of apparatuses.

For example, although only one processor 1001 is illustrated, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted.

The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object refers to a mobile object, of which moving speed is any speed, and also includes, as a matter of course, a case in which the moving object is stationary. For example, the moving object includes, but is not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, an airplane, a rocket, an artificial satellite, a drone, a multicopter, a quadcopter, a hot air balloon, and an object loaded on these. The moving object may be a moving object that autonomously moves based on an operation command.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

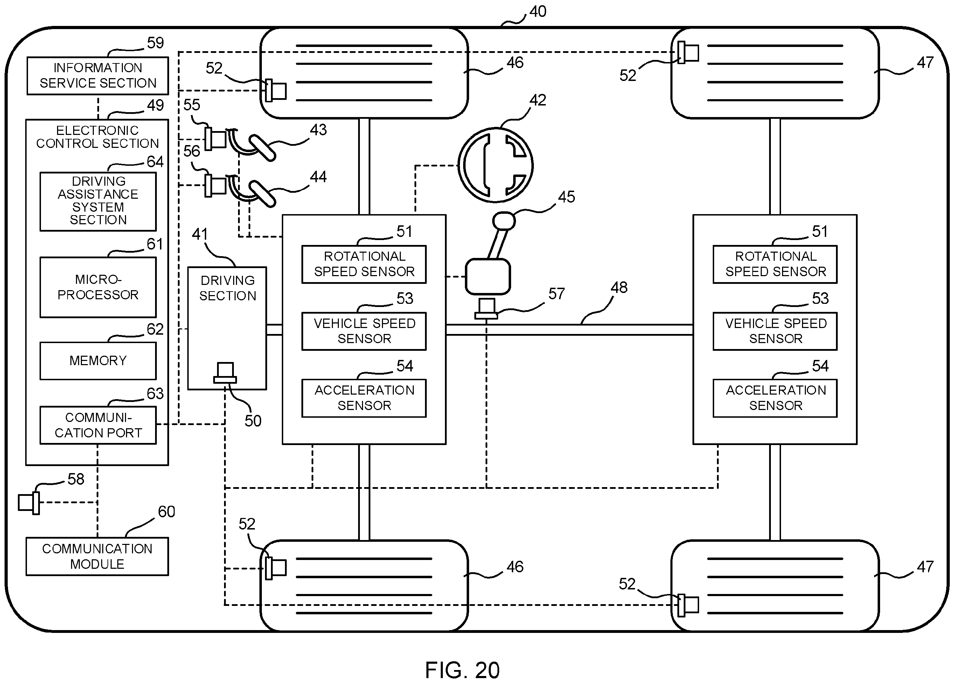

FIG. 20 is a diagram to illustrate an example of a vehicle according to one embodiment. As illustrated in FIG. 20, a vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, am input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing various information such as drive information, traffic information, and entertainment information, such as a car navigation system, an audio system, a speaker, a display, a television, and a radio, and one or more ECUs that control these devices. The information service section 59 provides various information/services (for example, multimedia information/multimedia service) for an occupant of the vehicle 40, using information acquired from an external apparatus via the communication module 60 and the like.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV)) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of the signals input to the electronic control section 49 from the various sensors 50 to 58 described above, and the information obtained based on the signals, to the external apparatus through radio communication.

The communication module 60 receives various information (traffic information, signal information, inter-vehicle distance information, and the like) transmitted from the external apparatus, and displays the various information on the information service section 59 included in the vehicle. The communication module 60 stores the various information received from the external apparatus in the memory 62 that can be used by the microprocessor 61. Based on the information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (x is, for example, an integer or a decimal), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a receiving section that receives a configuration of a sounding reference signal (SRS) resource set, and receives downlink control information including a plurality of indications of SRS resources in the SRS resource set; and
   a control section that applies the plurality of indications to a plurality of respective frequency parts used for a non-codebook transmission of a physical uplink shared channel.

2. The terminal according to claim 1, wherein

   the number of the plurality of frequency parts is Y, and
   the downlink control information includes Y or Y/2 fields for the SRS resources.

3. The terminal according to claim 1, wherein

   the physical uplink shared channel includes two codewords,
   the number of the plurality of frequency parts is Y, and
   the downlink control information includes 2Y fields for the SRS resources.

4. The terminal according to any one of claims 1 to 3, wherein
   each of the SRS resources in the SRS resource set uses a part of a band of the physical uplink shared channel.

5. A radio communication method for a terminal, the radio communication method comprising:

   receiving a configuration of a sounding reference signal (SRS) resource set, and receives downlink control information including a plurality of indications of SRS resources in the SRS resource set; and
   applying the plurality of indications to a plurality of respective frequency parts used for a non-codebook transmission of a physical uplink shared channel.

6. A based station comprising:

   a transmitting section that transmits a configuration of a sounding reference signal (SRS) resource set, and transmits downlink control information including a plurality of indications of SRS resources in the SRS resource set; and
a control section that applies the plurality of indications to a plurality of respective frequency parts used for a reception of a non-codebook transmission of a physical uplink shared channel.

**SRI indication for non-codebook based PUSCH transmission,** $L_{max} = 1$

| Bit field mapped to index | SRI(s), $N_{SRS} = 2$ | Bit field mapped to index | SRI(s), $N_{SRS} = 3$ | Bit field mapped to index | SRI(s), $N_{SRS} = 4$ |
|---|---|---|---|---|---|
| 0 | 0 | 0 | 0 | 0 | 0 |
| 1 | 1 | 1 | 1 | 1 | 1 |
| | | 2 | 2 | 2 | 2 |
| | | 3 | reserved | 3 | 3 |

FIG. 1

SRI indication for non-codebook based PUSCH transmission, $L_{\max} = 2$

| Bit field mapped to index | SRI(s), $N_{SRS} = 2$ | Bit field mapped to index | SRI(s), $N_{SRS} = 3$ | Bit field mapped to index | SRI(s), $N_{SRS} = 4$ |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6-7 | reserved | 6 | 0,3 |
| | | | | 7 | 1,2 |
| | | | | 8 | 1,3 |
| | | | | 9 | 2,3 |
| | | | | 10-15 | reserved |

FIG. 2

SRI indication for non-codebook based PUSCH transmission, $L_{max} = 3$

| Bit field mapped to index | SRI(s), $N_{SRS} = 2$ | Bit field mapped to index | SRI(s), $N_{SRS} = 3$ | Bit field mapped to index | SRI(s), $N_{SRS} = 4$ |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14-15 | reserved |

FIG. 3

SRI indication for non-codebook based PUSCH transmission, $L_{max} = 4$

| Bit field mapped to index | SRI(s), $N_{SRS} = 2$ | Bit field mapped to index | SRI(s), $N_{SRS} = 3$ | Bit field mapped to index | SRI(s), $N_{SRS} = 4$ |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14 | 0,1,2,3 |
| | | | | 15 | reserved |

FIG. 4

FIG. 5

## FIG. 6A

**SRI indication for non-codebook based**

**PUSCH transmission,** $L_{max} = 4$

| Bit field mapped to index | SRI(s), $N_{SRS} = 4$ |
|---|---|
| 0 | 0 |
| 1 | 1 |
| 2 | 2 |
| 3 | 3 |
| 4 | 0,1 |
| 5 | 0,2 |
| 6 | 0,3 |
| 7 | 1,2 |
| 8 | 1,3 |
| 9 | 2,3 |
| 10 | 0,1,2 |
| 11 | 0,1,3 |
| 12 | 0,2,3 |
| 13 | 1,2,3 |
| 14 | 0,1,2,3 |
| 15 | reserved |

## FIG. 6B

**SRI indication for non-codebook based**

**PUSCH transmission,** $L_{max} = 4$

| Bit field mapped to index | SRI(s), $N_{SRS} = 4$ |
|---|---|
| 0 | 0 |
| 1 | 1 |
| 2 | 2 |
| 3 | 3 |
| 0 | 0,1 |
| 1 | 0,2 |
| 2 | 0,3 |
| 3 | 1,2 |
| 4 | 1,3 |
| 5 | 2,3 |
| 0 | 0,1,2 |
| 1 | 0,1,3 |
| 2 | 0,2,3 |
| 3 | 1,2,3 |
| 0 | 0,1,2,3 |

## FIG. 7A

**SRI indication for non-codebook based**
**PUSCH transmission,** $L_{max} = 3$

| Bit field mapped to index | SRI(s), $N_{SRS} = 3$ |
|---|---|
| 0 | 0 |
| 1 | 1 |
| 2 | 2 |
| 3 | 0,1 |
| 4 | 0,2 |
| 5 | 1,2 |
| 6-7 | reserved |
| | |
| | |
| | |
| | |
| | |
| | |
| | |
| | |
| | |

## FIG. 7B

**SRI indication for non-codebook based**
**PUSCH transmission,** $L_{max} = 3$

| Bit field mapped to index | SRI(s), $N_{SRS} = 3$ |
|---|---|
| 0 | 0 |
| 1 | 1 |
| 2 | 2 |
| 0 | 0,1 |
| 1 | 0,2 |
| 2 | 1,2 |
| | |
| | |
| | |
| | |
| | |
| | |
| | |
| | |
| | |
| | |

EP 4 401 365 A1

| field #1 | field #2 | field #3 | | field #Y |
|---|---|---|---|---|
| EXISTING SRI FIELD | NEW SRI FIELD | NEW SRI FIELD | ... | NEW SRI FIELD |
| 1st freq. part | 2nd freq. part | 3rd freq. part | | Y-th freq. part |

EP 4 401 365 A1

FIG. 8

FIG. 9A

|  | field #1 | field #2 |  | field #Y/2 |
|---|---|---|---|---|

| EXISTING SRI FIELD | NEW SRI FIELD | ... | NEW SRI FIELD |
|---|---|---|---|
| 1st freq. part & 2nd freq. part | 3rd freq. part & 4th freq. part | | (Y-1)-th freq. part & Y-th freq. part |

FIG. 9B

| SRI field indicatoin | SRI for 1st (lower) freq. part | SRI for 2nd (higher) freq. part |
|---|---|---|
| 00 | 00 | 00 |
| 01 | 01 | 00 |
| 10 | 10 | 01 |
| 11 | 10 | 10 |

EP 4 401 365 A1

| 1st CW/TB | EXISTING SRI FIELD | NEW SRI FIELD | NEW SRI FIELD | ... | NEW SRI FIELD |
|-----------|-------------------|---------------|---------------|-----|---------------|
| | 1st freq. part | 2nd freq. part | 3rd freq. part | | Y-th freq. part |

| 2nd CW/TB | EXISTING SRI FIELD | NEW SRI FIELD | NEW SRI FIELD | ... | NEW SRI FIELD |
|-----------|-------------------|---------------|---------------|-----|---------------|
| | 1st freq. part | 2nd freq. part | 3rd freq. part | | Y-th freq. part |

FIG. 10

EP 4 401 365 A1

FIG. 11A

FIG. 11B

FIG. 11C

SRS resource

#0  #1  #2  #3

FREQUENCY

TIME

SRS resource set

SRI

Y=4, r=2

SRS resource

#0  #1  #2  #3

FREQUENCY

TIME

SRS resource set

36

EP 4 401 365 A1

FIG. 12A

SRS resource

#0  #1  #2  #3

FREQUENCY

SRS resource set:
X=1

TIME

FIG. 12B

SRI

| #0 | #3 |
| #0 | #3 |
| #0 | #1 |
| #0 | #2 |

Y=4, r=2

FIG. 12C

SRS resource

#0  #1  #2  #3

FREQUENCY

SRS resource set:
X=2

TIME

FIG. 12D

SRI

| #0 | #3 |
| #0 | #3 |
| #0 | #1 |
| #0 | #2 |

Y=4, r=2

# FIG. 13A

SRS resource

| | | | | |
|---|---|---|---|---|
| #0 | #1 | #2 | #3 | SRS resource group #0 |
| #4 | #5 | #1 | #6 | SRS resource group #1 |
| #7 | #8 | #9 | #10 | SRS resource group #2 |
| #7 | #11 | #8 | #12 | SRS resource group #3 |

FREQUENCY →

TIME →

SRS resource set: Z=4 groups, X=1

# FIG. 13B

SRI

| | |
|---|---|
| #0 | #3 |
| #2 | #3 |
| #0 | #1 |
| #0 | #2 |

Y=4, r=2

# FIG. 13C

SRI

| | |
|---|---|
| #0 | #3 |
| #0 | #3 |
| #0 | #1 |
| #0 | #2 |

Y=4, r=2

FIG. 14A

FIG. 14B

SRS resource group #0

SRS resource group #1

SRS resource group #2

SRS resource group #3

SRS resource set: Z=4 groups, X=1

Y=4, r=2

EP 4 401 365 A1

EP 4 401 365 A1

FREQUENCY →

W1    W2

* = MIMO precoder for each subband

FIG. 15

FIG. 16

FIG. 17

EP 4 401 365 A1

FIG. 18

EP 4 401 365 A1

BASE STATION 10, USER TERINAL 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 19

FIG. 20

## INTERNATIONAL SEARCH REPORT

| International application No. |
|---|
| **PCT/JP2021/033425** |

| A. | CLASSIFICATION OF SUBJECT MATTER |
|---|---|

*H04L 27/26*(2006.01)i
FI:  H04L27/26 114

According to International Patent Classification (IPC) or to both national classification and IPC

| B. | FIELDS SEARCHED |
|---|---|

Minimum documentation searched (classification system followed by classification symbols)

H04L27/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

3GPP TSG RAN WG1-4, SA WG1-4, CT WG1, 4

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | INTERDIGITAL INC. On non-codebook uplink transmission [online]. 3GPP TSG RAN WG1 #90b R1-1718478. 03 October 2017, Internet<URL:http://www.3gpp.org/ftp/tsg_ran/WG1_RL1/TSGR1_90b/Docs/R1-1718478.zip><br>sections 1-2 | 1-2, 4-6 |
| A | | 3 |
| Y | ZTE. Non-codebook based and hybrid based UL transmission [online]. 3GPP TSG RAN WG1 adhoc_NR_AH_1706 R1-1710177. 17 June 2017, Internet<URL:http://www.3gpp.org/ftp/tsg_ran/WG1_RL1/TSGR1_AH/NR_AH_1706/Docs/R1-1710177.zip><br>sections 1-5 | 1-2, 4-6 |
| A | | 3 |
| A | NOKIA, NOKIA SHANGHAI BELL. Offline discussion on UL non-codebook based transmission [online]. 3GPP TSG RAN WG1 adhoc_NR_AH_1801 R1-1801172. 29 January 2018, Internet<URL:http://www.3gpp.org7ftp/tsg_ran/WG1_RL1/TSGR1_AH/NR_AH_1801/Docs/R1-1801172.zip><br>section 1 | 1-6 |

☑ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 March 2022** | **15 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| PCT/JP2021/033425 |

### C.    DOCUMENTS CONSIDERED TO BE RELEVANT

| Category* | Citation of document, with indication, where appropriate, of the relevant passages | Relevant to claim No. |
|---|---|---|
| A | NTT DOCOMO, INC. Discussion on MTRP for reliability [online]. 3GPP TSG RAN WG1 #104-e R1-2101598. Internet<URL:https://www.3gpp.org/ftp/tsg_ran/WG1_RL1/ TSGR1_104-e/Docs/R1-2101598.zip>  section 3 | 1-6 |
| A | CATT. Discussion on multi-TRP/panel for PDCCH. PUCCH and PUSCH[online]. 3GPP TSG RAN WG1 #104b-e R1-2102599. 07 April 2021, Internet <URL:https://www.3gpp.org/ftp/ tsg_ran/WG1_RL1/TSGR1_104b-e/Docs/R1-2102599.zip>  section 4 | 1-6 |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010